# EUROPEAN PATENT APPLICATION

(11) **EP 3 421 938 A1**
(43) Date of publication of application: **02.01.2019**
(21) Application number: 17178762.5
(22) Date of filing: 29.06.2017
(51) Int. Cl.: G01C 21/36, B60W 50/00, B60W 30/16, G08G 1/0967, G08G 1/16

(54) **SYSTEM AND METHOD FOR ASSISTED DRIVING**

(71) Applicant: Advanced Digital Broadcast S.A., 1262 Eysins (CH)
(72) Inventor: BLONSKI, Pawel, 65-119 Zielona Gora (PL)
(74) Representative: Kancelaria Eupatent.pl Sp. z.o.o

(57) **Abstract**

A method for assisted driving, the method comprising the steps of: receiving (201), by a monitoring vehicle (V3) route and location data from at least one vehicle in proximity (301, 302, 304, 305); determining (203) at least one preceding vehicle which is about to make a turn; notifying (204) that at least one preceding vehicle is about to make a turn, based on said determination.

## Description

### TECHNICAL FIELD

The present invention relates to a system and method for assisted driving. In particular the present invention relates to making driving smoother, safer, more economic.

### BACKGROUND OF THE INVENTION

Prior art defines so called active cruise control systems. Such systems are an optional cruise control system for road vehicles that automatically adjusts the vehicle speed to maintain a safe distance from vehicles ahead.

Control is based on sensor information from on-board sensors. (No existing system makes use of satellite or roadside infrastructures nor of cooperative support from other vehicles.) Cooperative Adaptive Cruise Control (CACC) further extends the automation of navigation by using information gathered from fixed infrastructure such as satellites and roadside beacons, or mobile infrastructure such as reflectors or transmitters on the back of other vehicles.

Such systems may use a radar or laser sensor or a dual video camera setup allowing the vehicle to brake when it detects the car is approaching another vehicle ahead, then accelerate when traffic allows.

Active cruise control technology is widely regarded as a key component of any future generations of intelligent cars. They impact driver safety and convenience as well as increasing capacity of roads by maintaining optimal separation between vehicles and reducing driver errors (source: Wikipedia).

A drawback of such systems is that it only takes into account a vehicle directly in front. In practice such active cruise control makes abrupt changes of speed, in particular when decelerating. This may feel uncomfortable at times.

Secondly, the active cruise control only reacts to conditions already present on the road while not taking into account conditions that may apply in the future.

It would be advantageous to improve user's awareness with respect to future maneuvers of vehicles in proximity and in particular to take it into account when configuring said active cruise control systems.

### SUMMARY AND OBJECTS OF THE PRESENT INVENTION

The object of the invention is a method for assisted driving, the method comprising the steps of receiving (201), by a monitoring vehicle (V3) route and location data from at least one vehicle in proximity (301, 302, 304, 305); determining (203) at least one preceding vehicle which is about to make a turn; notifying (204) that at least one preceding vehicle is about to make a turn, based on said determination.

The method may further comprise filtering (202) in order to discard information concerning irrelevant vehicles.

Said irrelevant vehicles can be selected from a group of: vehicles traveling in opposite direction, vehicles traveling behind the present vehicle, vehicles traveling on a road without the right of way when the present vehicle is on a road with the right of way.

Said filtering (202) can be based on a monitored distance range, which depends on current speed of the monitoring vehicle (V3).

The method may further comprise: predicting (205) a minimum required speed decrease that will allow the reported, turning vehicle to make the turn; instructing (206) a cruise control system (106) to apply said minimum required speed decrease; and when the preceding vehicle has finished its maneuver, instructing (207) the cruise control system (106) to return to previous cruising speed.

Said notifying (204) can be effected by means of a navigation system display (401) of the vehicle.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

There is also disclosed a system for assisted driving, the system comprising: a data bus (101) communicatively coupled to a memory (104) for storing information regarding location and routes taken by vehicles in proximity; own route and location information block (102); a route and location transmission means (103); a route and location reception means (108) for receiving said location and routes taken by vehicles in proximity; a controller (105) configured to execute all steps of the method as described above.

The system may further comprise a cruise control system (106) and wherein said controller (105) is further configured to operate according to all steps of the method as described above.

### BRIEF DESCRIPTION OF THE DRAWINGS

These and other objects of the invention presented herein, are accomplished by providing a system and method for assisted driving. Further details and features of the present invention, its nature and various advantages will become more apparent from the following detailed description of the preferred embodiments shown in a drawing, in which:
Fig. 1 presents a diagram of the system according to the present invention;
Fig. 2 presents a diagram of the method according to the present invention;
Fig. 3 presents a traffic situation in which the system and method of the present invention are employed and;
Fig. 4 shows an example of a user interface implementing the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

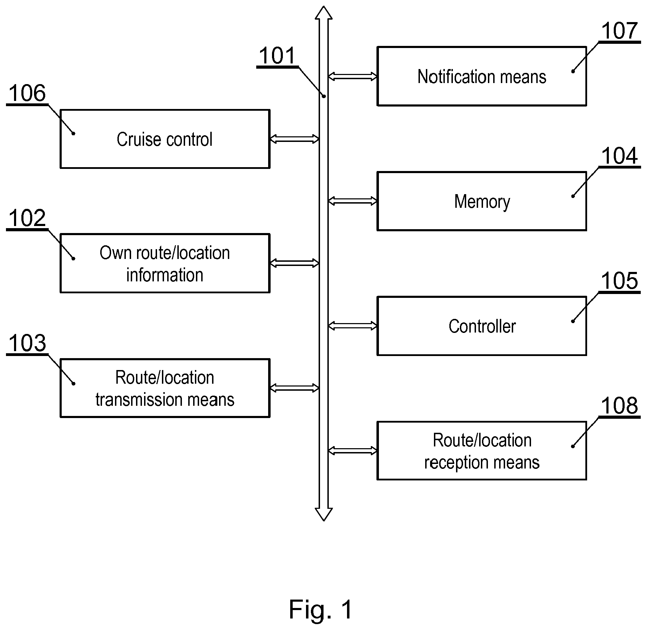

Fig. 1 presents a diagram of the system according to the present invention. The system is preferably a hardware component of a vehicle or may be a separate device.

The system may be realized using dedicated components or custom made FPGA or ASIC circuits. The system comprises a data bus (101) communicatively coupled to a memory (104). Additionally, other components of the system are communicatively coupled to the system bus (101) so that they may be managed by a controller (105).

The memory (104) may store computer program or programs executed by the controller (105) in order to execute steps of the method according to the present invention. The memory (104) may also store information regarding location and routes taken by vehicles in proximity as well as configuration of the system.

First, the system takes into consideration, own route and location information, available in the respective block (102). The route information may be input by a user using any suitable means, known in the art, while a location may be obtained by any geolocation system such as a GPS or GLONASS. This information is naturally updated with a progress of time. An update interval of 0,5s or 1 s should be sufficient.

A module, associated with the own route/location information module (102) is a route/location transmission means (103). This module broadcasts (preferably at intervals of for example 1s) route and location of the vehicle, using any suitable radio transmission scheme. In order to minimize amount of data only a next or two upcoming maneuvers may be transmitted instead of the full route. This will also allow to keep more privacy (i.e. the vehicles in proximity do not know their destinations but rather only the upcoming one or two maneuvers).

The broadcast may be effected by any short to medium range wireless communication. In some instances even cellular technology such as 3G or LTE may be used with a suitable server as an intermediary. In case of a server arrangement, when a vehicle system sends its location and route data it receives in return location and routes data of vehicles in proximity (108).

The route / location reception means (108) utilizes any suitable radio transmission scheme.

The controller (105) may also be responsible for filtering the received route / location data (108) depending for example on a direction of movement of a given vehicle. For example, if location / route data is received but it is determined that the vehicle concerned moves in an opposite direction or is behind the present vehicle, its data may be discarded in subsequent processing.

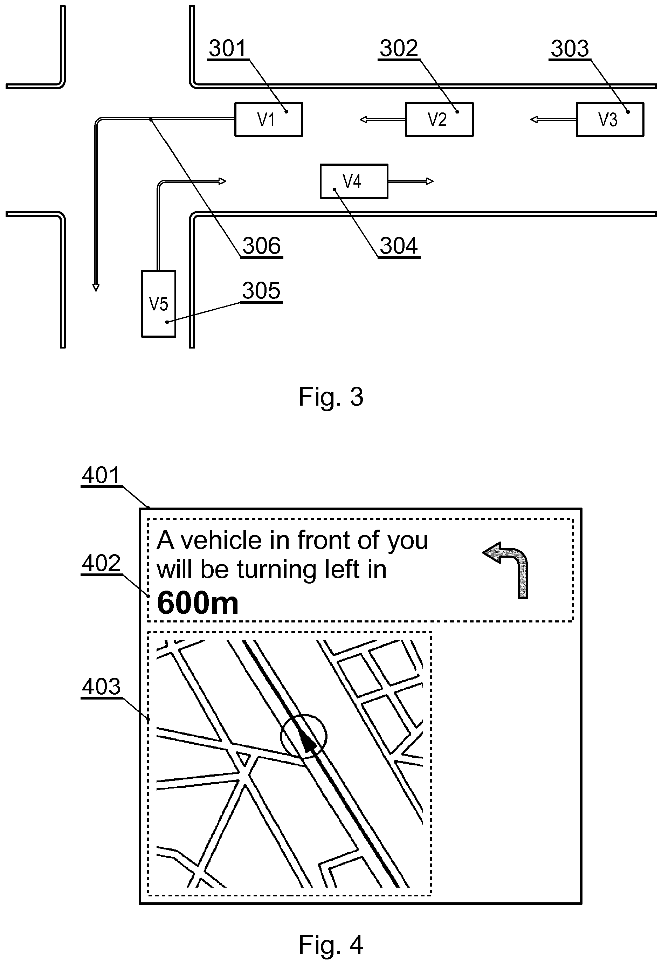

Lastly, the system comprises notifications means that notify that a vehicle in proximity (typically in front of the vehicle and moving in the same direction) will make a maneuver in a near future. Such notification may in the end result in a simple alert to a user (visual and/or sound and/or display) or a detailed notification as presented in Fig. 4.

In a more sophisticated version of the system, the controller may instruct a cruise control system (106) to appropriately reduce speed if necessary, wherein the reduction of speed is the lowest possible to let the vehicle in front reduce speed and make the turn.

For example, if a driver of a vehicle is unaware that a preceding vehicle will turn soon, he may need to come to a full stop at an intersection, whereas if the driver knew in advance that the preceding vehicle will turn, he may increase its distance to the preceding vehicle in order to avoid such full stop. Such increase of distance may be automatically calculated depending on road conditions (e.g. speed, current distance to the preceding vehicle, distance to the maneuver, number of vehicles making the same turn etc.) and programmed to the aforementioned cruise control system (106).

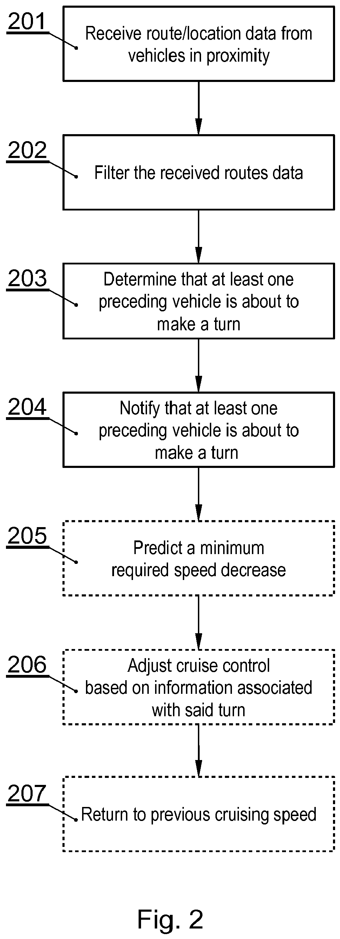

Fig. 2 presents a diagram of the method according to the present invention. The method starts at step (201) from receiving route/location data from vehicles (there may be only one vehicle) in proximity to the system according to the present invention (the monitoring system/vehicle).

Typically, the system will receive data from a plurality of vehicles also moving in different directions. A direction of movement may be given explicitly by the sender or assumed based on current location and the next maneuver of a vehicle.

Next, at step (202) which may be optional, the received routes data are filtered in order to discard information concerning irrelevant vehicles such as vehicles traveling in opposite direction, traveling behind the present vehicle or traveling on a road without the right of way when the present vehicle is on a road with the right of way (other similar circumstances may be also taken into account such as a distance to the vehicle in question or current speed of the other vehicle (likelihood of increasing or decreasing a distance)).

Subsequently, at step (203), there is determined at least one preceding vehicle which is about to make a turn. Depending on used data broadcasting means and transmission intervals, the term 'about to' may result in ranges from tens of meters to hundreds of meters.

When such determination is made, at step (204), the system notifies (a user or another system) that at least one preceding vehicle is about to make a turn. The notification means may be as simple as switching a signal light on or playing back a warning sound but typically will be integrated into a vehicle's navigation system, which may display an information screen as presented in Fig. 4 (hence notification to another system).

Optionally, a more sophisticated reaction to step (204) may be applied as specified in steps (205 - 207). First, at step (205), the system may predict a minimum required speed decrease (i.e. a maximum speed) that will allow the reported, turning vehicle to make the turn. For example, if a given vehicle slows down from 70 km/h to 65 km/h in a given road situation, a preceding vehicle will make the turn safely, otherwise if the given vehicle delays said slowing down, it will need to decrease its speed by a greater amount in the end e.g. 50 km/h. The first option will naturally make the travel smoother and more efficient.

When, said prediction is made, the cruise control system (106) may be appropriately instructed (206) and when the preceding vehicle has finished its maneuver, the cruise control system (106) may be instructed to return to previous cruising speed (207).

Fig. 3 presents a traffic situation, in which the system and method of the present invention are employed. In this case it is assumed that vehicle V3 (303) is analyzing the road situation while for the sake of simplicity the remaining vehicles V1, V2, V4 and V5 (301, 302, 304, 305) broadcast their route / location data.

It is also assumed, in Fig. 3, that the horizontal road (vehicles V1, V2, V3 and V4) has the right of way while the vertical road (vehicle V5) does not have the right of way.

Vehicles V1, V2, V4 and V5 broadcast their route / location data to vehicle V3, which decides to discard data of V5 (as being on a road without the right of way with respect to the road on which V3 is moving) and V4 (as moving in the opposite direction).

This leaves V1 and V2 data as relevant information. At the current speed of V3, both V1 and V2 are present within a monitored distance range. The monitored distance range may depend on current speed of V3, for example at 50 km/h a range of 150m will most likely be sufficient, while in case of 100 km/h a range of 500m or more may be applied depending also on user's configuration of the system.

Further, the system determines that the V1 is about to make a turn left (306) even though the driver of V1 may not have yet considered it necessary to switch on a turn indicator light and even further ahead of the actual breaking.

Based on this information a driver of V3 may adjust his driving accordingly or the cruise control system (106) may be appropriately instructed (206), as per Fig. 2, in order to make the driving smoother and more economic.

Safety is also improved because in case of heavy rain or fog a driver may be notified about a preceding vehicle's maneuver even when the preceding vehicle cannot be seen.

Further, in case of heavy load vehicles, their drivers appreciate smooth ride since acceleration is very costly. Thus, awareness of upcoming maneuvers of preceding vehicles is very important to them.

Fig. 4 shows an example of a graphical user interface implementing the present invention. Using a navigation system display (401) of a vehicle (used as the notification means (107)), the system according to the present invention may notify a driver that a vehicle in front will be turning left in a given distance (402). A suitable map (403) may also be presented.

Naturally, a user may have an option of activating and deactivating the system. Sometimes it may be beneficial in situations where there may be dozens of relevant vehicles in dense traffic in which smooth and economic driving is hardly achievable.

The present system improves awareness of situation on a road, improves safety as well as provides for a more smooth and economic travel. A driver who knows the maneuvers of the cars before their car can refrain from taking some actions (such as increasing the speed and taking over the preceding car), therefore the safety is increased by decreasing the number of maneuvers performed by the drivers. Further, the system may be installed not only in motor vehicles, but also on/in other transportation means such as bicycles, boats, yachts or similar. Therefore, the invention provides a useful, concrete and tangible result.

As per the system and data processing method described above, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for assisted driving may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for assisted driving, the method comprising the steps of:
• receiving (201), by a monitoring vehicle (V3) route and location data from at least one vehicle in proximity (301, 302, 304, 305);
• determining (203) at least one preceding vehicle which is about to make a turn;
• notifying (204) that at least one preceding vehicle is about to make a turn, based on said determination.

2. The method according to claim 1 further comprising filtering (202) in order to discard information concerning irrelevant vehicles.

3. The method according to claim 2 wherein said irrelevant vehicles are selected from a group of: vehicles traveling in opposite direction, vehicles traveling behind the present vehicle, vehicles traveling on a road without the right of way when the present vehicle is on a road with the right of way.

4. The method according to claim 2 wherein said filtering (202) is based on a monitored distance range, which depends on current speed of the monitoring vehicle (V3).

5. The method according to claim 1 further comprising:
• predicting (205) a minimum required speed decrease that will allow the reported, turning vehicle to make the turn;
• instructing (206) a cruise control system (106) to apply said minimum required speed decrease; and
• when the preceding vehicle has finished its maneuver, instructing (207) the cruise control system (106) to return to previous cruising speed.

6. The method according to claim 1 wherein said notifying (204) is effected by means of a navigation system display (401) of the vehicle.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. A system for assisted driving, the system comprising:
• a data bus (101) communicatively coupled to a memory (104) for storing information regarding location and routes taken by vehicles in proximity;
• own route and location information block (102);
• a route and location transmission means (103);
• a route and location reception means (108) for receiving said location and routes taken by vehicles in proximity;
• a controller (105) configured to execute all steps of the method according to claim 1.

10. The system according to claim 9 further comprising a cruise control system (106) and wherein said controller (105) is further configured to operate according to all steps of the method according to claim 5.
